# FASCICULE DE BREVET EUROPEEN

(11) **EP 2 469 988 B1**
(45) Date de publication et mention de la délivrance du brevet: **22.05.2019**
(21) Numéro de dépôt: 11306779.7
(22) Date de dépôt: 27.12.2011
(51) Int. Cl.: H05B 37/02, H05B 33/08

(54) **Mesure de luminosité au plafond.**
Helligkeitsmaß an der Decke
Measurement of luminosity on the ceiling.

(30) Priorité: 27.12.2010 FR 1061288
(43) Date de publication de la demande: 27.06.2012
(73) Titulaire: Hager Controls SAS, 67700 Saverne (FR)
(72) Inventeur: Woelffel, Vincent, 67670 Mommenheim (FR); Lutzing, Olivier, 67140 Gertwiller (FR); Dupin, Jérome, 67440 Singrist (FR)
(74) Mandataire: Nuss, Laurent

(56) Documents cités:
- EP-A1- 1 657 614
- EP-A1- 1 821 582
- WO-A1-2010/111250
- DE-A1-102008 036 992
- US-A- 4 701 669
- US-A- 6 025 679
- US-A1- 2006 091 822

## Description

La présente invention concerne un procédé de gestion de luminaires installés au plafond d'une pièce, dont la fonction est d'adapter automatiquement l'éclairage artificiel émanant desdits luminaires à la lumière naturelle en vue d'assurer un niveau de luminosité global suffisant, voire constant, au niveau des postes de travail équipant ladite pièce.

Concrètement, il s'agit d'automatiser l'allumage des luminaires lorsque la luminosité naturelle n'est pas suffisante, leur extinction dans l'hypothèse inverse, et éventuellement d'ajuster leur commande en fonction des variations de la lumière naturelle pour assurer un niveau de luminosité sensiblement égal. La commande des luminaires s'effectue classiquement à partir de mesures de la luminosité dans la pièce effectuées par au moins un capteur, et qui sont transmises par exemple à une unité de régulation électronique traitant lesdites mesures, à partir desquelles elle produit des consignes pour des moyens de commande des luminaires. Selon le cas, ces moyens de commandes peuvent être prévus pour permettre simplement l'allumage/extinction des luminaires, ou leur variation en temps réel en vue de modifier l'intensité de la luminosité artificielle selon les variations de lumière naturelle détectées.

La mesure de luminosité par au moins un capteur localisé au plafond de la pièce pose cependant de multiples problèmes qui rendent délicate la mise au point d'un fonctionnement automatisé de type standardisé. En premier lieu, l'influence de l'environnement sur le fonctionnement est déterminante. Or, les conditions environnementales sont propres à chaque installation, et dépendent de multiples facteurs au rang desquels on peut citer par exemple le nombre et la présence de fenêtres, la position de la pièce dans le bâtiment (étage et orientation) ; la couleur des sols et murs, voire les teintes des éléments du mobilier, en ce qu'ils participent à la gestion de la lumière dans la pièce notamment par les réflexion qu'ils induisent ; l'implantation, le nombre et le positionnement des luminaires, etc.

La principale difficulté, lorsqu'il s'agit de gérer le niveau de luminosité dans une pièce à partir de capteurs localisés au plafond, provient de la différence de luminosité qui existe au niveau de ce dernier et au niveau des surfaces de travail que constituent par exemple les bureaux, où il est en définitive réellement important que la luminosité soit correctement gérée. Or, les différents facteurs évoqués auparavant jouent un rôle important et peu aisément modélisable, en tout cas pas de manière standardisée, dans les luminosités relatives existant à ces deux niveaux. A cet égard, il serait par exemple souhaitable d'utiliser un rapport de type R = (luminosité au plafond) / (luminosité sur le bureau) pour traiter optimalement l'information disponible au plafond, c'est à dire en pratique la relier au mieux à des conditions réelles de luminosité au niveau des bureaux. Il est par exemple facile de comprendre que, suivant l'heure de la journée et selon l'orientation des fenêtres - sans même mentionner les variations de pouvoir réfléchissant/absorbant des parois - les rayons du soleil ont un angle d'incidence différent modifiant la luminosité ressentie et les conditions de réflexion, affectant par conséquent les mesures effectuées par le ou les capteurs, et susceptibles de compliquer le calcul de la luminosité au niveau des bureaux. Une solution connu est divulguée dans la publication de demande de brevet WO2010/111250 A1 (Lutron Electronics Co.).

La luminosité artificielle étant fournie par des lampes situées dans le plafond, celles-ci illuminent par ailleurs très correctement les surfaces de travail vers lesquelles elles sont orientées, mais très peu le plafond. Ce dernier est principalement affecté par une combinaison de lumière d'une part naturelle directe et provenant d'autre part de la réflexion de la totalité des rayons lumineux présents, naturels et artificiels.

Pour s'affranchir ou à tout le moins diminuer autant que possible l'influence des réflexions de la lumière naturelle, il a été proposé de réduire l'angle d'ouverture du capteur, ce qui a notamment été mis en oeuvre dans les produits antérieurs de la déposante, pour limiter sa mesure à un cône qui englobe le bureau situé sous lui. Un positionnement du capteur à l'intérieur du boîtier du produit, ou un guide de lumière ont été utilisés à cet effet. Les variations du rapport R sont alors beaucoup moins importantes, sauf dans certains cas particuliers où la luminosité naturelle est importante, par exemple les jours ensoleillés lorsque le soleil est au zénith. Dans cette hypothèse, dans laquelle ledit rapport se rapproche de 1 en raison des fortes réflexions des rayons sur le sol ou le bureau, la gestion de luminaires n'est toutefois pas nécessaire puisque la lumière naturelle est suffisante.

Une solution également mise en oeuvre dans l'art antérieur consiste en la calibration du capteur directement sur le lieu de son implantation, de manière à définir un rapport R en principe plus précis car lié au contexte, notamment défini par la lumière naturelle de la pièce d'implantation. Cela améliore la précision de la mesure, mais il reste le problème de la différence de rapport de réflexion pour la lumière artificielle. Un produit calibré dans son environnement uniquement par rapport à la lumière naturelle ne fonctionne en effet pas nécessairement correctement dans toutes les circonstances, du fait de l'absence de prise en compte des changements dus à la lumière artificielle.

Le procédé selon l'invention remédie à ces insuffisances, en définissant deux rapports de réflexion, un pour la lumière naturelle et un pour la lumière artificielle. Ainsi, selon l'invention, l'unité de régulation de l'éclairage utilise deux coefficients R1 et R2, le coefficient R2 étant appliqué aux valeurs ou variations de luminosité mesurées résultant d'une modification de consigne de l'unité de régulation à destination des moyens de commande des luminaires, le coefficient R1 étant appliqué aux valeurs ou variations de luminosité naturelle mesurées indépendantes de changements de consignes.

La difficulté, en l'espèce, est de différencier la lumière artificielle et la lumière naturelle. Il a été proposé, dans des solutions existantes, d'utiliser deux capteurs de lumière centrés sur des longueurs d'ondes différentes, reflétant le fait que le spectre de la lumière naturelle est différent de celui des lampes. Cette solution présente cependant un inconvénient majeur dans la mesure où le choix des ampoules ou lampes installées dépend de l'utilisateur, et que chaque type de lampe présente un spectre qui lui est propre. Ainsi, les lampes disponibles sur le marché comme les lampes à incandescence, les lampes à halogènes, les tubes fluorescents, les ampoules fluocompactes, les lampes à diode électroluminescente (led), les lampes à vapeur de sodium, etc. ont toutes des spectres de lumière bien différents les unes des autres.

Une solution basée sur des capteurs distincts n'est donc pas adéquate, et la solution de l'invention n'utilise en fait qu'un unique capteur de luminosité présentant un spectre proche de celui de l'oeil humain, c'est-à-dire centré sur 560 nm, disposé en retrait dans le produit. En réalité, l'approche suivie par l'invention est de différencier la lumière artificielle de la lumière naturelle par procédé, en appliquant les deux coefficients mentionnés auparavant par exemple par voie logicielle dans l'unité de régulation.

Il y a ensuite deux modes de fonctionnement possibles qui dépendent en fait des moyens de commande des luminaires, un premier mode « tout ou rien » dans lequel, selon les conditions de luminosité naturelles, les lampes sont allumées ou éteintes, et un second mode permettant de faire varier l'intensité de la lumière par exemple pour maintenir un niveau constant de luminosité dans la pièce ou plus généralement pour opérer des ajustements fins dans la gestion du niveau de lumière.

Dans l'hypothèse d'un fonctionnement avec variateur de lumière auquel l'unité de commande envoie alors des consignes de variation, une valeur de la luminosité artificielle est calculée à chaque modification de consigne. Le calcul s'effectue par soustraction de la lumière mesurée et d'une valeur de la lumière naturelle mesurée et mise en mémoire avant la modification de consigne, après application du coefficient R1 donnant la lumière naturelle calculée, puis la luminosité globale est calculée en additionnant ladite luminosité naturelle calculée et la luminosité artificielle à laquelle est appliqué le coefficient R2.

La luminosité globale calculée est mémorisée après chaque calcul, et la luminosité naturelle est mémorisée avant chaque modification de consigne.

En l'absence de changement de consigne issu de l'unité de régulation à destination des moyens de commande des luminaires, la variation de luminosité mesurée est affectée du coefficient R1, ajoutée à ou retranchée de la valeur calculée de luminosité naturelle mémorisée, et comparée au seuil S1, générant une consigne d'extinction des luminaires si elle est supérieure audit seuil S1.

Dans l'hypothèse d'un changement dans le niveau de luminosité naturelle, il convient en principe de modifier la commande des luminaires pour conserver une luminosité globale constante, et une consigne de variation de la luminosité artificielle est générée par l'unité de régulation à l'adresse du variateur, générant une variation de luminosité mesurée à laquelle est bien entendu affecté le coefficient R2.

Dans une hypothèse d'un fonctionnement en tout ou rien, l'unité de régulation commande par exemple un relais marche/arrêt apte à mettre les luminaires sous tension ou hors tension.

Une mesure de l'apport de luminosité dû aux lampes est effectuée par mesure des luminosités avant et après chaque extinction des luminaires, une valeur moyenne sur les n derniers changements d'état vers l'extinction desdits luminaires étant mémorisée par l'unité de régulation.

Par défaut, une valeur moyenne théorique d'apport lumineux dû aux lampes est mise en mémoire dans l'unité de régulation avant mise en fonctionnement.

Plus précisément, sur un plan structurel, l'unité de régulation comporte un microcontrôleur, commandant le variateur dans l'une des versions et le relais dans l'autre.

En fait, de préférence, selon l'invention, le coefficient R1 est compris entre 4 et 6 et le coefficient R2 est compris entre 8 et 12.

Le fonctionnement, suivant le procédé de l'invention, tel qu'il a été décrit plus haut, n'est en réalité mis en oeuvre dans la plupart des cas qu'avec un fonctionnement de l'unité de régulation asservi à un détecteur de présence. En l'absence de toute personne dans la pièce, il n'est bien entendu pas nécessaire de procéder à un allumage des luminaires, même si la lumière naturelle n'est pas suffisante pour éclairer la pièce dans de bonnes conditions.

L'invention va à présent être décrite plus en détail, en référence aux figures annexées, pour lesquelles :
- la figure 1 est un diagramme illustrant le fonctionnement dans le premier mode en tout ou rien ;
- la figure 2 représente un organigramme de fonctionnement dans le second mode variable ; et
- la figure 3 montre un diagramme illustrant le fonctionnement dans le second mode variable et permettant une régulation du niveau de luminosité.

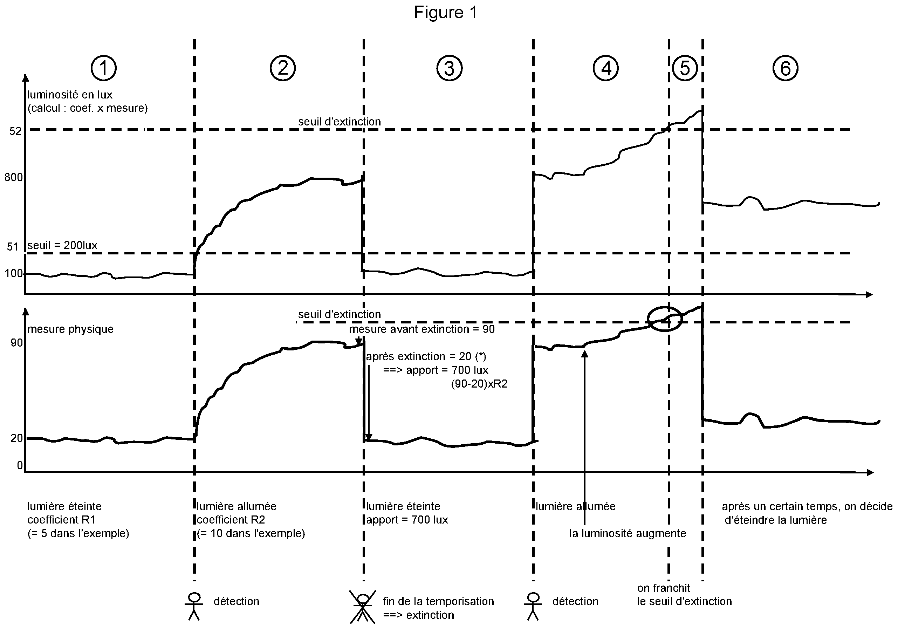

En référence à la figure 1, le diagramme comporte en réalité une superposition de deux courbes, celle du bas correspondant à la mesure physique de la luminosité qui règne dans la pièce alors que celle du haut indique la luminosité calculée, après application des coefficients R1 et R2 dont il a été fait état. Compte tenu que les coefficients R1 et R2 se montent à plusieurs unités, les échelles des deux courbes ne sont bien entendu pas les mêmes sur l'axe des ordonnées. Pour les besoins de l'explication, le diagramme a été subdivisé en six zones correspondant à des phases distinctes de fonctionnement.

En phase 1, la lumière est éteinte, la mesure physique de la luminosité, effectuée par le capteur situé dans la pièce, indique un niveau de 20 lux. Selon le procédé, la luminosité calculée s'élève à 100 lux, puisque c'est le coefficient R1, en l'espèce égal à 5, qui est utilisé. Le seuil S1 calculé est en l'espèce fixé à 200 lux, et il est mémorisé par l'unité de régulation pour les étapes de comparaison. Compte tenu que l'on se situe en dessous dudit seuil S1, un éclairage correct de la pièce nécessiterait en principe en allumage des luminaires. Toutefois, un détecteur de présence est prévu, qui n'indique aucune fréquentation de la pièce, et les luminaires restent donc éteints.

La phase 2 se caractérise par un allumage des luminaires, qui fait suite à la détection d'une présence dans la pièce. Dans ce cas, la luminosité calculée devient la somme de la luminosité naturelle de la phase 1 et du différentiel, auquel est affecté le coefficient R2, en l'espèce égal à 10. Ce différentiel est appelé apport lumineux, et il est calculé et mémorisé lors du passage de la phase 2 à la phase 3, à la fin d'une temporisation si le détecteur de présence indique qu'il n'y a plus personne dans la pièce.

En l'occurrence, cet apport calculé se monte à 700 lux, puisque la mesure physique passe de 90 lux à 20 lux après extinction, ce qui implique un différentiel de 70 lux mesurés, et donc de 700 lux calculés puisqu'il faut lui appliquer le coefficient R2 égal à 10. Une nouvelle détection provoque le passage de la phase 3 à la phase 4. L'apport de lumière est à présent connu, au moins par la mémorisation lors du passage de la phase 2 à la phase 3. En fait, de préférence, une moyenne est conservée suite à un nombre prédéterminé de mémorisations réalisées au cours des dernières extinctions. La valeur calculée obtenue après allumage des luminaires est constamment comparée au seuil d'extinction S2 calculé, qui correspond en pratique à la somme de S1, de l'apport de lumière moyenné et d'une valeur d'hystérésis.

L'apport de luminosité artificielle ne changeant en pratique pas ou peu, et la réalisation de la moyenne précitée permettant de s'adapter aux changements de luminosité des luminaires dans la durée, toute variation de luminosité doit être considérée comme venant de la luminosité naturelle. La différence entre la luminosité totale mesurée et l'apport de luminosité connu se voit affecter le coefficient R1. Lorsque cette valeur totale dépasse le seuil calculé S2, lors du passage de la phase 4 à la phase 5, une temporisation prédéterminée est mise en oeuvre, couvrant la durée de la phase 5. A l'issue de celle-ci, il est considéré que la lumière naturelle se maintient au-dessus du seuil S1, et les luminaires sont éteints au début de la phase 6.

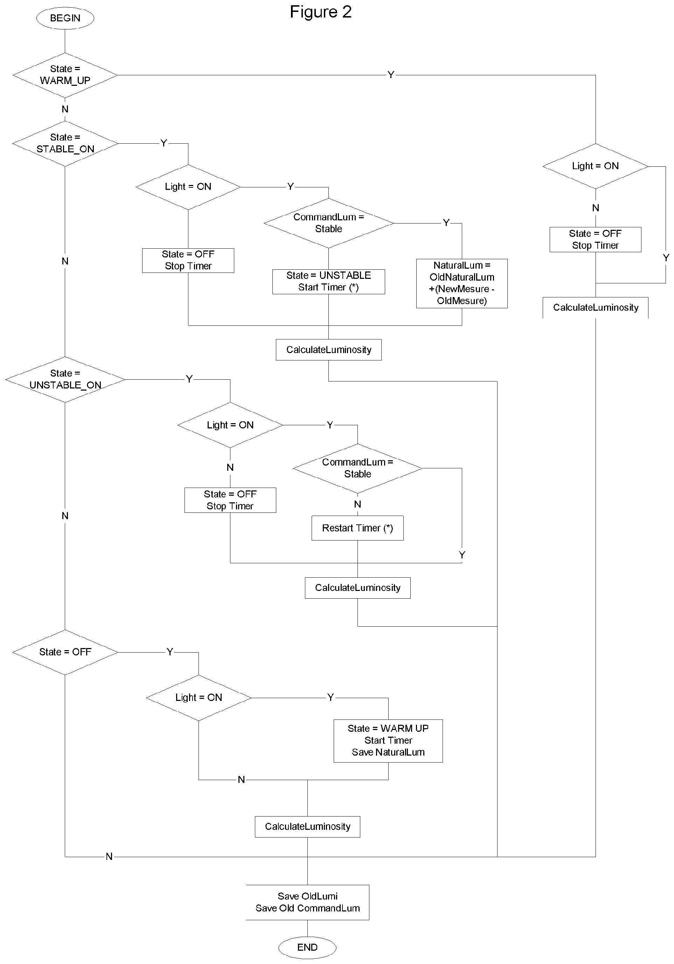

Le fonctionnement à l'aide d'un variateur, permettant de maintenir la luminosité dans la pièce à un niveau sensiblement constant quelles que soient les variations de la lumière naturelle et dans la mesure où celle-ci n'est pas suffisante pour justifier l'extinction des luminaires, fait l'objet de la figure 2. Une variable dénommée "state" régulièrement scannée représente l'état de la commande des luminaires et, selon sa valeur, ouvre sur quatre boucles de fonctionnement complémentaires. Lorsqu'elle est égale à "WARM_UP", le dispositif de contrôle et de commande des luminaires est en phase de démarrage. Dans cette hypothèse, le programme teste si les luminaires sont allumés et, dans l'affirmative, procède à un calcul de la luminosité globale en lançant une routine intitulée CalculateLuminosity. Celle-ci consiste à additionner la luminosité naturelle calculée à partir de R1 et la luminosité artificielle à laquelle on affecte un coefficient de réflexion/correction, en fait R2. Dans cette routine, la luminosité artificielle est préalablement obtenue par la soustraction de la mesure de la luminosité globale mesurée et de la luminosité naturelle mesurée.

Dans l'hypothèse où les luminaires ne sont pas allumés, la variable « State » se voit conférer la valeur OFF, auquel cas le système stoppe toujours une temporisation déclenchée (voir ci-après) s'il y a changement de consigne.

Si la variable « State » contient la valeur STABLE_ON, signifiant que la commande de la lumière par le variateur n'a pas changé, le programme vérifie si les luminaires sont allumés, et dans ce cas, s'il y a un changement de consigne pour l'intensité desdits luminaires. Si c'est le cas, une variable « CommandLum » change d'état, et la variable « State » se voit attribuer la valeur UNSTABLE_ON en même temps que la temporisation précitée est déclenchée. A la fin de cette temporisation, la variable State est remise à STABLE_ON.

Sinon, la luminosité naturelle (NaturalLum) est calculée, en additionnant la valeur précédente mémorisée (OldNaturalLum) à la différence entre la nouvelle et l'ancienne mesure (Newmesure - Oldmesure). Dans cette même boucle, si les luminaires ne sont pas allumés, la variable « State » est mise à OFF. Dans tous les cas, la routine de calcul de la luminosité CalculateLuminosity est mise en oeuvre.

Si la variable « State » contient la valeur UNSTABLE_ON, ce qui indique qu'un changement de consigne pour la commande des luminaires s'est produit, la boucle commence par tester si les luminaires sont allumés et, dans l'hypothèse où cela n'est pas le cas, l'issue est la même que dans la boucle précédente. Si les luminaires sont allumés, la variable CommandLum est testée de la même manière que dans la boucle précédente, et si elle change d'état, la temporisation est redéclenchée à son échéance précédente (elle était déjà déclenchée puisque le passage de la variable « State » de STABLE_ON à UNSTABLE_ON la déclenche). A la fin de cette temporisation, la variable State est mise à STABLE_ON. Ensuite, quel que soit l'état de la variable CommandLum, ou si les lumières ne sont pas allumées, la routine de calcul de luminosité CalculateLuminosity est mise en oeuvre.

Dans l'hypothèse où la variable « State » contient OFF, et dans le cas où les luminaires sont allumés, la variable « State » est mise à WARM_UP, la temporisation est déclenchée et la valeur de la lumière naturelle NaturalLum est mémorisée. Ensuite, de même que si les luminaires ne sont pas allumés, la routine de calcul de la luminosité CalculateLuminosity est mise en oeuvre en fin de boucle.

En sortant de toutes ces boucles, la valeur de luminosité précédente OldLumi et l'état de la variable de commande de luminosité CommandLum précédentes sont sauvegardés.

Ces différentes boucles fonctionnent de manière que la variation de la lumière des luminaires soit automatiquement gérée de façon à garder sensiblement constant le niveau de lumière dans une pièce.

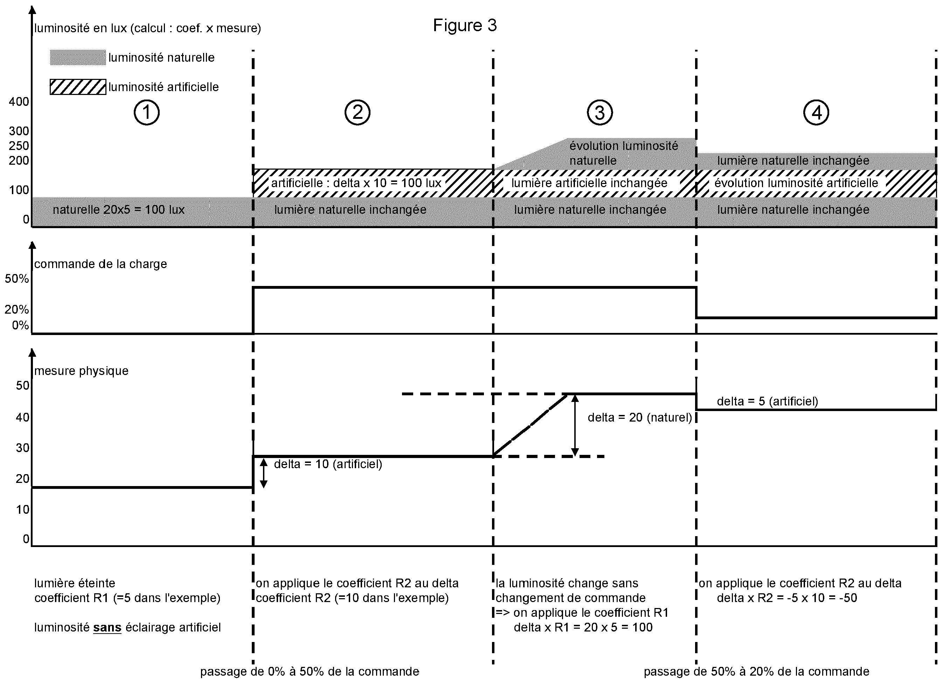

Une illustration du fonctionnement variable apparaît en figure 3. Cette figure 3 reprend le même formalisme que la figure 1, une courbe intermédiaire montrant la variation de commande de la charge étant figurée au milieu des deux courbes, celle du bas correspondant à la mesure physique de la luminosité alors que celle du haut indique la luminosité calculée après application des coefficients R1 et R2.

Cette fois, le diagramme a été subdivisé en cinq zones correspondant à des phases de fonctionnement propres à un système variable.

Quelques valeurs de la figure 1 ont été reprises, signifiant en réalité des conditions d'environnement équivalentes et permettant une meilleure comparaison des deux modes de fonctionnement. Ainsi, en phase 1, la lumière est éteinte et la mesure physique de la luminosité, effectuée par le capteur situé dans la pièce indique à nouveau un niveau de 20 lux. Selon le procédé de l'invention, la luminosité calculée s'élève à 100 lux, puisque c'est le coefficient R1, en l'espèce toujours égal à 5, qui est utilisé.

La phase 2 se caractérise par un allumage des luminaires, suite à une consigne de commande du variateur qui passe de 0% à 50 % de luminosité artificielle. Dans ce cas, la luminosité globale calculée, qui est la somme de la luminosité naturelle de la phase 1 et du différentiel mesuré (égal à 10 dans l'exemple) auquel est affecté le coefficient R2 (toujours égal à 10), s'élève donc à 200 lux.

En phase 3, la luminosité naturelle mesurée augmente de 20 lux, et la luminosité artificielle demeure inchangée. Cet apport de lumière naturelle porte la luminosité globale calculée à 300 lux. Pour effectuer une régulation contrôlée de la lumière, une nouvelle consigne est envoyée au variateur, opération qui est restituée en phase 4 : la consigne est abaissée à 20%, qui se traduit par une perte de luminosité globale mesurée de 5 lux, à laquelle est appliqué le coefficient R2 (10). Il convient donc d'enlever 50 lux à la luminosité globale calculée précédente de 300 lux, pour aboutir à une nouvelle luminosité calculée de 250 lux.

## Revendications

1. Procédé de gestion de luminaires installés au plafond d'une pièce, lesdits luminaires étant associés à une unité de régulation de leur éclairage connecté d'une part à au moins un capteur de luminosité ambiante et d'autre part à des moyens de commande de la luminosité et/ou de l'état des luminaires consistant en un variateur auquel l'unité de commande envoie des consignes de variation, l'ensemble étant prévu pour assurer au moins :
- leur allumage lorsque une luminosité naturelle calculée dans la pièce est inférieure à un seuil prédéterminé S1 ;
- leur extinction lorsque les luminaires sont allumés et que la luminosité naturelle calculée dépasse ledit seuil S1 à laquelle est ajoutée une valeur d'hystérésis,
ladite unité de régulation fonctionnant sur la base d'un rapport théorique prédéterminé entre la luminosité au plafond et la luminosité au niveau de plans de travail équipant la pièce et fournissant au moins un coefficient multiplicatif R appliqué à la luminosité mesurée par le capteur de luminosité ambiante,
**caractérisé en ce que** l'unité de régulation de l'éclairage utilise deux coefficients R1 et R2, le coefficient R2 étant appliqué aux valeurs ou variations de luminosité mesurées par le capteur de luminosité ambiante résultant d'une modification de consigne de l'unité de régulation à destination des moyens de commande des luminaires, le coefficient R1 étant appliqué aux valeurs ou variations de luminosité naturelle mesurées par le capteur de luminosité ambiante indépendantes de changements de consignes et **en ce que**
une luminosité artificielle est calculée par soustraction de la lumière mesurée par le capteur de luminosité ambiante et d'une valeur de la lumière naturelle mesurée par le capteur de luminosité ambiante et mise en mémoire avant la modification de consigne, après application du coefficient R1 donnant la luminosité naturelle calculée, puis la luminosité globale est calculée en additionnant ladite luminosité naturelle calculée et la luminosité artificielle à laquelle est appliqué le coefficient R2.

2. Procédé de gestion de luminaires selon la revendication précédente, **caractérisé en ce que** la luminosité globale calculée est mémorisée après chaque calcul.

3. Procédé de gestion de luminaires selon l'une des revendications précédentes, **caractérisé en ce que** la luminosité naturelle est mémorisée avant chaque modification de consigne.

4. Procédé de gestion de luminaires selon la revendication précédente, **caractérisé en ce qu'**en l'absence de changement de consigne pour les moyens de commande des luminaires, la variation de luminosité mesurée est affectée du coefficient R1, ajoutée à ou retranchée de la valeur calculée de luminosité naturelle mémorisée, et comparée au seuil S1, générant une consigne d'extinction des luminaires si elle est supérieure audit seuil S1.

5. Procédé de gestion de la mise en oeuvre de luminaires installés au plafond d'une pièce selon l'une quelconque des revendications précédentes, **caractérisé en ce que** l'unité de régulation commande un relais marche/arrêt apte à mettre les luminaires sous tension ou hors tension.

6. Procédé de gestion de la mise en oeuvre de luminaires installés au plafond d'une pièce selon la revendication 1, **caractérisé en ce qu'**une mesure de l'apport de luminosité dû aux lampes est effectuée par mesure des luminosités avant et après chaque extinction des luminaires, une valeur moyenne sur les n derniers changements d'état vers l'extinction desdits luminaires étant mémorisée par l'unité de régulation.

7. Procédé de gestion de la mise en oeuvre de luminaires installés au plafond d'une pièce selon la revendication précédente, **caractérisé en ce qu'**une valeur moyenne théorique d'apport lumineux dû aux lampes est mise en mémoire dans l'unité de régulation avant mise en fonctionnement.

8. Procédé de gestion de la mise en oeuvre de luminaires installés au plafond d'une pièce selon l'une quelconque des revendications précédentes, **caractérisé en ce que** l'unité de régulation comporte un microcontrôleur.

9. Procédé de gestion de la mise en oeuvre de luminaires installés au plafond d'une pièce selon l'une quelconque des revendications précédentes, **caractérisé en ce que** le coefficient R1 est compris entre 4 et 6 et le coefficient R2 est compris entre 8 et 12.

10. Procédé de gestion de la mise en oeuvre de luminaires installés au plafond d'une pièce selon l'une quelconque des revendications précédentes, **caractérisé en ce que** le fonctionnement de l'unité de régulation est asservi à un détecteur de présence.

## Patentansprüche

1. Verfahren zum Steuern von an der Decke eines Raumes installierten Leuchten, wobei diese Leuchten einer Einheit zu ihrer Beleuchtungsregelung zugeordnet sind, die einerseits mit mindestens einem Umgebungshelligkeitssensor und andererseits mit Mitteln zum Steuern der Helligkeit und/oder des Zustands der Leuchten verbunden ist, welche einen Dimmer umfassen, an den die Steuereinheit Dimmanweisungen sendet, wobei das Ganze dazu vorgesehen ist, um zumindest Folgendes zu gewährleisten:
- ihr Einschalten, wenn eine berechnete natürliche Helligkeit im Raum geringer als ein vorgegebener Schwellenwert S1 ist;
- ihr Erlöschen, wenn die Leuchten eingeschaltet sind und wenn die berechnete natürliche Helligkeit den Schwellenwert S1 übersteigt, welchem ein Hysteresewert hinzugefügt wurde,
wobei die Regeleinheit auf der Grundlage eines vorgegebenen theoretischen Verhältnisses zwischen der Helligkeit an der Decke und der Helligkeit auf Höhe der im Raum angeordneten Arbeitsflächen arbeitet und zumindest einen multiplikativen Koeffizienten R bereitstellt, der auf die vom Umgebungshelligkeitssensor gemessene Helligkeit angewandt wird,
**dadurch gekennzeichnet, dass** die Beleuchtungsregeleinheit zwei Koeffizienten R1 und R2 verwendet, wobei der Koeffizient R2 auf sich aus einer Dimm-Modifikation der Regeleinheit für die Leuchtensteuermittel ergebende Werte oder Veränderungen der Helligkeit angewandt wird, die vom Umgebungshelligkeitssensor gemessen werden, wobei der Koeffizient R1 auf Werte oder Veränderungen der natürlichen Helligkeit, die vom Umgebungshelligkeitssensor gemessen werden und unabhängig von Dimm-Modifikationen sind, angewandt wird, und dadurch, dass
eine künstliche Helligkeit durch Subtraktion des Lichts, das vom Umgebungshelligkeitssensor gemessen wurde, und eines natürlichen Lichtwertes, der vom Umgebungshelligkeitssensor gemessen und vor der Dimm-Modifikation gespeichert wurde, berechnet wird, und dass
nach Anwendung des Koeffizienten R1, der die berechnete natürliche Helligkeit liefert, dann die Gesamthelligkeit berechnet wird, indem die berechnete natürliche Helligkeit mit der künstlichen Helligkeit, auf die der Koeffizient R2 angewandt wird, addiert wird.

2. Verfahren zum Steuern von Leuchten nach dem vorangehenden Anspruch, **dadurch gekennzeichnet, dass** die berechnete Gesamthelligkeit nach jeder Berechnung gespeichert wird.

3. Verfahren zum Steuern von Leuchten nach einem der vorangehenden Ansprüche, **dadurch gekennzeichnet, dass** die natürliche Helligkeit vor jeder Dimmmodifikation gespeichert wird.

4. Verfahren zum Steuern von Leuchten nach dem vorangehenden Anspruch, **dadurch gekennzeichnet, dass** bei Abwesenheit der Dimm-Modifikation für die Leuchtensteuermittel die gemessene Helligkeitsveränderung dem Koeffizienten R1 unterworfen wird, zu dem gespeicherten berechneten natürlichen Helligkeitswert hinzugefügt oder von diesem abgezogen wird und mit dem Schwellenwert S1 verglichen wird, um eine Leuchtenlöschanweisung zu erzeugen, wenn sie höher als der Schwellenwert S1 ist.

5. Verfahren zur Betriebssteuerung von an der Decke eines Raumes installierten Leuchten nach einem der vorangehenden Ansprüche, **dadurch gekennzeichnet, dass** die Regeleinheit ein Ein-/Ausschaltrelais steuert, das zum Ein- oder Ausschalten der Leuchten geeignet ist.

6. Verfahren zur Betriebssteuerung von an der Decke eines Raumes installierten Leuchten nach Anspruch 1, **dadurch gekennzeichnet, dass** eine Helligkeitsbeitragsmessung der Lampen durch Helligkeitsmessungen vor und nach jedem Erlöschen der Leuchten durchgeführt wird, wobei ein Mittelwert der n letzten Zustandsänderungen zum Erlöschen der Leuchten durch die Regeleinheit gespeichert wird.

7. Verfahren zur Betriebssteuerung von an der Decke eines Raumes installierten Leuchten nach dem vorangehenden Anspruch, **dadurch gekennzeichnet, dass** ein theoretischer Lichteinstrahlungsmittelwert der Lampen in der Regeleinheit vor der Inbetriebnahme gespeichert wird.

8. Verfahren zur Betriebssteuerung von an der Decke eines Raumes installierten Leuchten nach einem der vorangehenden Ansprüche, **dadurch gekennzeichnet, dass** die Regeleinheit einen Mikrocontroller aufweist.

9. Verfahren zur Betriebssteuerung von an der Decke eines Raumes installierten Leuchten nach einem der vorangehenden Ansprüche, **dadurch gekennzeichnet, dass** der Koeffizient R1 zwischen 4 und 6 liegt und der Koeffizient R2 zwischen 8 und 12.

10. Verfahren zur Betriebssteuerung von an der Decke eines Raumes installierten Leuchten nach einem der vorangehenden Ansprüche, **dadurch gekennzeichnet, dass** die Funktion der Regeleinheit einem Präsenzdetektor unterliegt.

## Claims

1. Method for managing lights installed in the ceiling of a room, said lights being associated with a unit for regulating their brightness, which is connected on the one hand to at least one sensor of ambient light level and on the other hand to means for controlling the brightness and/or state of the lights consisting of a variable supply to which the control unit sends variation setpoints, all provided to ensure at least:
- their turn-on when a natural light level calculated in the room is lower than a preset threshold S1;
- their turn-off when the lights are turned on and the calculated natural light level exceeds said threshold S1 plus a hysteresis value,
said regulating unit operating on the basis of a preset theoretical ratio between the light level at the ceiling and the light level at desktops with which the room is equipped and delivering at least one multiplicational coefficient R that is applied to the light level measured by the sensor of ambient light level,
**characterized in that** the unit for regulating brightness uses two coefficients R1 and R2, the coefficient R2 being applied to the values or variations in the light level measured by the sensor of ambient light level resulting from a modification of the setpoint supplied by the regulating unit to the means for controlling the lights, the coefficient R1 being applied to values or variations in the natural light level measured by the sensor of ambient light level that are independent of setpoint changes and **in that**
an artificial light level is calculated by subtracting the brightness measured by the sensor of ambient light level and a value of the natural brightness measured by the sensor of ambient light level and stored in memory before the setpoint modification, after the coefficient R1 giving the calculated natural light level has been applied, then the overall light level is calculated by adding said calculated natural light level and the artificial light level to which is applied the coefficient R2.

2. Method for managing lights according to the preceding claim, **characterized in that** the calculated overall light level is stored in memory after each calculation.

3. Method for managing lights according to one of the preceding claims, **characterized in that** the natural light level is stored in memory before each setpoint modification.

4. Method for managing lights according to the preceding claim, **characterized in that**, in the absence of a change in the setpoint of the means for controlling the lights, the measured variation in light level is assigned the coefficient R1, added to or subtracted from the stored calculated value of natural light level, and compared to the threshold S1, a setpoint requiring lights to be turned off being generated if said variation is larger than said threshold S1.

5. Method for managing the implementation of lights installed in the ceiling of a room according to any one of the preceding claims, **characterized in that** the regulating unit controls an on/off relay able to turn the lights on or off.

6. Method for managing the implementation of lights installed in the ceiling of a room according to Claim 1, **characterized in that** a measurement of the increase in light level due to the lights is carried out by measuring light levels before and after each turn-off of the lights, an average value over the n last changes in state of said lights to turned off being stored in memory by the regulating unit.

7. Method for managing the implementation of lights installed in the ceiling of a room according to the preceding claim, **characterized in that** a theoretical average value of the increase in light level due to the lights is stored in memory in the regulating unit before start-up.

8. Method for managing the implementation of lights installed in the ceiling of a room according to any one of the preceding claims, **characterized in that** the regulating unit comprises a microcontroller.

9. Method for managing the implementation of lights installed in the ceiling of a room according to any one of the preceding claims, **characterized in that** the coefficient R1 is comprised between 4 and 6 and the coefficient R2 is comprised between 8 and 12.

10. Method for managing the implementation of lights installed in the ceiling of a room according to any one of the preceding claims, **characterized in that** the operation of the regulating unit is slaved to a presence detector.
